# EUROPEAN PATENT SPECIFICATION

(11) **EP 4 275 183 B1**
(45) Date of publication and mention of the grant of the patent: **18.03.2026**
(21) Application number: 22702495.7
(22) Date of filing: 04.01.2022
(51) Int. Cl.: G06V 20/00, G06V 20/40

(54) **METHOD AND SYSTEM FOR FLAME MONITORING AND CONTROL**
VERFAHREN UND SYSTEM ZUR FLAMMENÜBERWACHUNG UND -STEUERUNG
PROCÉDÉ ET SYSTÈME DE SURVEILLANCE ET DE RÉGULATION DE FLAMME

(30) Priority: 08.01.2021 FI 20215014
(43) Date of publication of application: 15.11.2023
(73) Proprietor: Andritz Oy, 00180 Helsinki (FI)
(72) Inventor: TORMIKOSKI, Pekka, 57101 Savonlinna (FI); TASKINEN, Antti, 57101 Savonlinna (FI); VIITANEN, Timo, 57101 Savonlinna (FI); LAPPI, Heikki, 48601 Kotka (FI); AALTONEN, Ossi, 15100 Lahti (FI)
(74) Representative: Devine, Christopher
(86) International application number: PCT/FI2022/050006
(87) International publication number: WO 2022/148906

(56) References cited:
- CN-A- 107 730 548
- DE-A1- 10 143 548
- LI WEITAO ET AL: "Multisource Data Ensemble Modeling for Clinker Free Lime Content Estimate in Rotary Kiln Sintering Processes", IEEE TRANSACTIONS ON SYSTEMS, MAN, AND CYBERNETICS: SYSTEMS, IEEE, PISCATAWAY, NJ, USA, vol. 45, no. 2, 1 February 2015 (2015-02-01), pages 303 - 314, XP011569948, ISSN: 2168-2216, [retrieved on 20150113], DOI: 10.1109/TSMC.2014.2332305
- YANJUN LIN ET AL: "On-line burning state recognition for sintering process using SSIM index of flame images", PROCEEDING OF THE 11TH WORLD CONGRESS ON INTELLIGENT CONTROL AND AUTOMATION, IEEE, 29 June 2014 (2014-06-29), pages 2352 - 2357, XP032742380, DOI: 10.1109/WCICA.2014.7053089

## Description

### TECHNICAL FIELD

The present invention relates to a method and arrangement for flame monitoring and control. In particular, but not exclusively, the present invention relates to a method and arrangement for monitoring and control of the flame of a burner of a lime kiln.

### BACKGROUND

White liquor is produced in a caustisizing process in which green liquor arriving from a recovery boiler reacts with calcium forming white liquor and lime mud. The following chemical reaction takes place:

Na2CO3 + CaO + H2O -> 2NaOH + CaCO3

A lime kiln is used in cellulose manufacturing for producing lime from lime mud for use in preparing white liquor used in the cooking process. A calcining reaction takes place:

CaCO3 -> CaO + CO2

The calcining reaction requires heat, which is produced in a separate burner using oil, gas or a further fuel. The operation of the lime kiln is adjusted by increasing or decreasing the amount of fuel and by controlling the air delivery at the burner. The amount of remaining calcium carbonate is measured from the produced lime, the level of which is sought to be kept constant.

In case too much fuel is used in the burner or the air delivery is faulty, the temperature might rise too high. In such case, calcium particles will melt, and the lining of the kiln might be damaged. Then again, insufficient fuel will cause a large part of the lime mud to remain unreacted resulting in an inadequate caustisizing process.

Previously, the caustisizing process has been controlled by sampling and measuring the remaining calcium carbonate which did not provide for real time adjustment of the process. Furthermore, methods for monitoring the burning using imaging have been previously disclosed. One example is the document LI WEITAO ET AL: "Multisource Data Ensemble Modeling for Clinker Free Lime Content Estimate in Rotary Kiln Sintering Processes", IEEE TRANSACTIONS ON SYSTEMS, MAN, AND CYBERNETICS: SYSTEMS, IEEE, PISCATAWAY, NJ, USA,vol. 45, no. 2, 1 February 2015 (2015-02-01), pages 303-314, XP011569948,ISSN: 2168-2216, DOI: 10.1109/TSMC.2014.2332305.

It is the object of the present invention to improve the existing solutions by providing a method for monitoring the flame of the burner in order to monitor the caustisizing process and enable an easy and quick control of the process.

### SUMMARY

Various aspects of examples of the invention are set out in the claims.

According to a first example, there is provided a method for monitoring a flame of a burner of a lime kiln, comprising
imaging a video stream showing the burner end of the lime kiln;
extracting at least one image from the imaged video stream;
determining, using a pretrained algorithm, from the at least one image at least one area of interest, wherein the at least one area of interest comprises a part of the at least one image showing an area comprising at least one characteristic portion of the flame and/or burner end;
calculating the area of the at least one characteristic portion based on the pixels of the at least one area of interest; and
determining at least one quantity of interest based on the calculated area of the at least one characteristic portion.

The method may further comprise comparing the calculated area and/or the at least one quantity of interest with predetermined threshold values.

The method may further comprise displaying the at least one quantity of interest on a user interface element.

The method may further comprise adjusting the operation of the burner based on the at least one quantity of interest.

The pretrained algorithm may be created by
imaging a video stream showing the burner end of the lime kiln;
extracting a plurality of training images from the imaged video stream and segmenting each image of the plurality of training images into areas of interest, wherein the area of interest for at least one image comprises the interior of the lime kiln; and
training an algorithm to recognize the areas of interest from the segmented images.

The method may further comprise
extracting a reference image from the imaged video stream; and
determining using known dimensions of the lime kiln visible in the reference image corresponding size in SI-units for a pixel of the reference image.

According to a second example, there is provided a system for monitoring a flame of a burner of a lime kiln, comprising
imaging means; and
a processor configured to cause carrying out the method of the first example aspect of the present invention.

According to a third example, there is provided a computer program comprising computer-executable program code that, when executed by a processor, causes carrying out a method according to the first example aspect.

According to a fourth example, there is provided a non-transitory memory medium comprising the computer program of the third example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a flow chart of a method according to an example embodiment of the invention;
Fig. 2 shows a further flow chart of a method according to an example embodiment of the invention; and
Fig. 3 shows an example image used in the method according to an example embodiment of the invention.

### DETAILED DESCRIPTION OF THE DRAWINGS

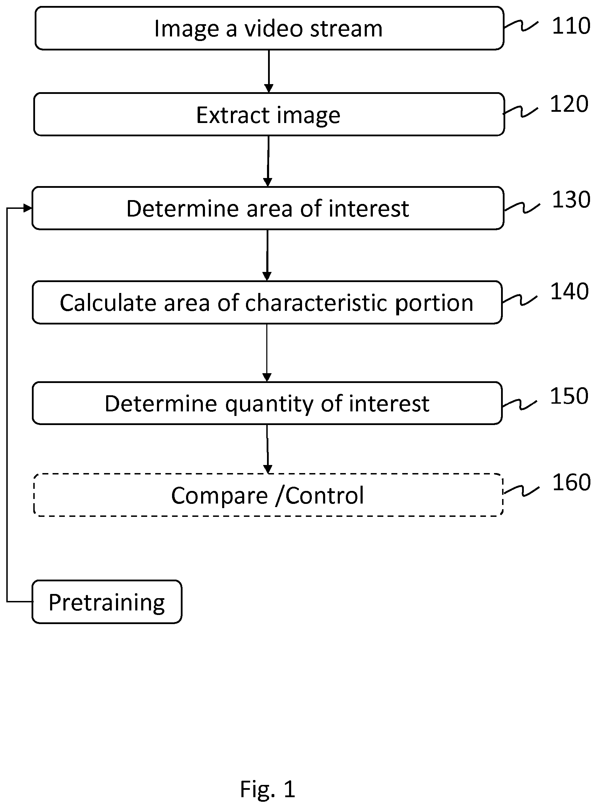

Fig. 1 shows a flow chart of a method according to an example embodiment of the invention. In an embodiment, the method according to an example embodiment of the invention is caused to be carried out by a processor, for example a processor of a control system. In an embodiment, the control system is a standalone control system configured to control the method, for example a local control system or a cloud-based control system. In a further embodiment, the control system is integrated into a mill-wide control system.

At step 110 a video stream showing the burner end of a lime kiln is imaged. In an embodiment, the imaging means for providing the video stream comprise at least one means selected from the group of digital video camera, a digital still camera configured to capture consecutive still images, a high-speed video camera and thermal imaging means. In an embodiment, the camera is installed in a suitable location so that an appropriate area of the burner end of the lime kiln is imaged.

At step 120, at least one image is extracted from the video stream showing the burner end of the lime kiln. The extracted image, or at least a portion thereof, depicts the burner end of the lime kiln. The image is extracted from the video stream using convenient procedures in image and video processing.

At step 130, at least one area of interest is determined from the at least one image, wherein the at least one area of interest comprises a part of the at least one image showing an area comprising at least one characteristic portion of the burner end. In an embodiment, the at least on characteristic portion comprises white flame portion, black flame portion and/or lime bed. Determining the area of interest is carried out using an algorithm pretrained in a manner described in detail hereinafter.

At step 140, the area of the at least one characteristic portion is calculated based on the determined at least one area of interest based on the pixels thereof. In an embodiment, an area in SI-units is determined for the pixels in pretraining the algorithm used. In an embodiment, calculating the area of the at least one characteristic portion comprises calculating a relative area, for example the area of the white flame portion relative to the area of the cross-section of the kiln.

At step 150, at least one quantity of interest is determined based on the calculated area of the at least one characteristic portion. In an embodiment, the at least one quantity of interest is determined based on the calculated area, location or further feature of one or several characteristic portion. In an embodiment, a further feature of the at least one characteristic portion comprises color properties extracted from the image.

In an embodiment, the at least one quantity of interest is determined based on the calculated area, location or further feature of one or several characteristic portions directly or using interim quantities from which the at least one quantity of interest is derived. For example, a flame pumping index based on fluctuation of the length of the flame is in an embodiment calculated using the largest and the smallest length from a certain period of time. According to the invention, at least one calculated quantity of interest is selected from the group of flame angle, black flame area, white flame area, lime area, flame pumping index, dust index inside the kiln, lime back spill area, flame length, flame width and flame tip angle. In an embodiment, the calculated value of the at least one quantity of interest is an absolute value or relative value compared to lime kiln cross section area or a part thereof. In an embodiment, the absolute values comprise SI-units, pixels or an index value in a specified range.

After the at least one quantity of interest has been determined, the result is in an embodiment at step 150 compared to at least one predetermined threshold value for the quantity of interest in order to ascertain that the lime kiln is operating in a desired manner. The at least one quantity of interest is, in an embodiment, sent to a control system. In an embodiment, the at least one quantity of interest is displayed on a user interface element, such as a display. In an embodiment, the determined at least one quantity of interest is used to adjust, or control, the burning process of the lime kiln for example by adjusting the air distribution in the burner or by adjusting the fuel amount.

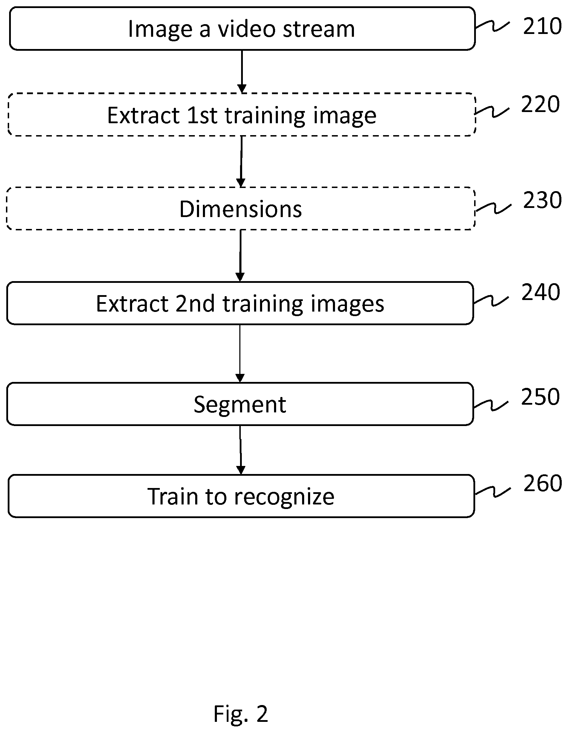

Fig. 2 shows a further flow chart according to an example embodiment of the invention. Fig. 2 shows the method for pretraining the algorithm for determining the at least one area of interest according to an example embodiment of the invention. At step 210, a video stream showing the burner end of a lime kiln is imaged. In an embodiment, the imaging means for providing the video stream comprise at least one means selected from the group of digital video camera, a digital still camera configured to capture consecutive still images, a high-speed video camera and thermal imaging means.

At step 220, a reference image is extracted from the video stream imaged at step 210. The extracted reference image, or at least a portion thereof, depicts the burner end of the lime kiln. The reference image is extracted from the video stream using convenient procedures in image and video processing. At step 230, a size in SI-units for pixels of the reference image is determined using known dimensions of the burner end of the lime kiln depicted in the reference image. In an embodiment, steps 220 and 230 are skipped, should the determination of the pixel sizes have been previously carried out and/or should the corresponding size in SI-units be known.

At step 240, a plurality of training images is extracted from the video stream imaged at step 210. The plurality of training image is extracted from the video stream using convenient procedures in image and video processing. In an embodiment, the plurality of training images comprises images from different operating situations.

For each image of the plurality of training images, at least one characteristic portion is segmented into separate images of the plurality of training images at step 250. In an embodiment, the at least one characteristic portion comprises white flame portion, black flame portion, pipe area and/or lime bed. In an embodiment, the segmenting is carried out manually, i.e. a user, or operator, carries out the segmenting for example by selecting the characteristic portions from each image.

At step 260 the algorithm is trained to recognize the characteristic portions using the plurality of training images that have been segmented at step 250 as a training data set. In an embodiment, the algorithm comprises a deep learning neural network. In a further embodiment, the recognition, or detection, of characteristic portions is based on further image analysis methods such as thresholding and morphological operations. In a further embodiment, different methods can be used together or separately.

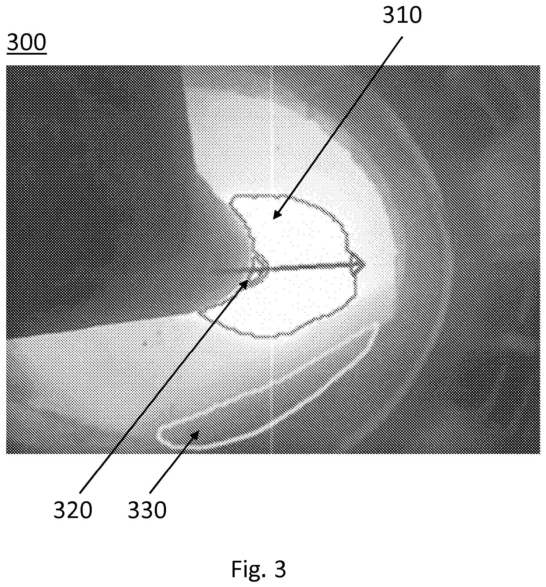

Fig. 3 shows an example image 300 used in the method according to an example embodiment of the invention. The image 300 depicts the burner end of the lime kiln. Fig. 3 shows example characteristic portions and areas of interest 310, 320 and 330 determined from the image showing the characteristic portions according to the method of the invention. In the example of Fig. 3, the area of interest 310 comprises white flame portion, the area of interest 320 comprises black flame portion and the area of interest 330 comprises the lime bed.

Without in any way limiting the scope, interpretation, or application of the claims appearing below, a technical effect of one or more of the example embodiments disclosed herein is providing a monitoring method with which reacting to disturbances of the burning can be recognized and reacted to substantially faster. Another technical effect of one or more of the example embodiments disclosed herein is the provision of a more stable burning process by adjusting fuel and air feeding. Another technical effect of one or more of the example embodiments disclosed herein is a more stable calcining process resulting in a balanced production of white liquor. A still further technical effect of one or more of the example embodiments disclosed herein is a more environmentally friendly operation.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method for monitoring a flame of a burner of a lime kiln, comprising
imaging a video stream showing the burner end of the lime kiln;
extracting at least one image from the imaged video stream;
determining, using a pretrained algorithm, from the at least one image at least one area of interest, wherein the at least one area of interest comprises a part of the at least one image showing an area comprising at least one characteristic portion of the flame and/or burner end;
calculating the area of the at least one characteristic portion based on the pixels of the at least one area of interest;
selecting at least one calculated quantity of interest from the group of flame angle, black flame area, white flame area, lime area, flame pumping index, dust index inside the kiln, lime back spill area, flame length, flame width and flame tip angle;
determining the at least one quantity of interest based on the calculated area of the at least one characteristic portion; and comparing the calculated area and the at least one quantity of interest with predetermined threshold values.

2. A method according to claim 1, further comprising displaying the at least one quantity of interest on a user interface element.

3. A method according to claim 1, further comprising adjusting the operation of the burner based on the at least one quantity of interest.

4. A method according to any preceding claim, wherein the pretrained algorithm is created by
imaging a video stream showing the burner end of the lime kiln;
extracting a plurality of training images from the imaged video stream and segmenting each image of the plurality of training images into areas of interest, wherein the area of interest for at least one image comprises the interior of the lime kiln; and
training an algorithm to recognize the areas of interest from the segmented images.

5. A method according to claim 4, further comprising
extracting a reference image from the imaged video stream; and
determining using known dimensions of the lime kiln visible in the reference image corresponding size in SI-units for a pixel of the reference image.

6. A control system for controlling a burner of a lime kiln, comprising a system for monitoring a flame of the burner of a lime kiln, comprising
imaging means; and
a processor configured to cause carrying out the method of any preceding claim, wherein the processor is further configured to cause adjusting the operation of the burner based on the at least one quantity of interest.

7. A computer program product comprising computer-executable program code that when executed by a processor causes carrying out the method of any preceding claim.

8. A non-transitory memory medium comprising the computer program product of claim 7.

## Patentansprüche

1. Verfahren zum Überwachen einer Flamme eines Brenners eines Kalkofens, welches Folgendes umfasst:
Aufnehmen eines Videostroms, der das Brennerende des Kalkofens zeigt;
Extrahieren wenigstens eines Bildes aus dem aufgenommenen Videostrom;
Bestimmen, unter Verwendung eines vortrainierten Algorithmus, aus dem wenigstens einen Bild, wenigstens eines Bereichs von Interesse, wobei der wenigstens eine Bereich von Interesse einen Teil des wenigstens einen Bildes umfasst, der einen Bereich zeigt, der wenigstens einen charakteristischen Abschnitt der Flamme und/oder des Brennerendes umfasst;
Berechnen der Fläche des wenigstens einen charakteristischen Abschnitts basierend auf den Pixeln des wenigstens einen Bereichs von Interesse;
Auswählen wenigstens einer berechneten Größe von Interesse aus der Gruppe von Flammenwinkel, schwarzem Flammenbereich, weißem Flammenbereich, Kalkbereich, Flammenpumpindex, Staubindex innerhalb des Ofens, Kalkrücklaufbereich, Flammenlänge, Flammenbreite und Flammenspitzenwinkel;
Bestimmen der wenigstens einen Größe von Interesse basierend auf der berechneten Fläche des wenigstens einen charakteristischen Abschnitts; und Vergleichen der berechneten Fläche und der wenigstens einen Größe von Interesse mit vorbestimmten Schwellenwerten.

2. Verfahren nach Anspruch 1, das ferner Anzeigen der wenigstens einen Größe von Interesse auf einem Benutzerschnittstellenelement umfasst.

3. Verfahren nach Anspruch 1, das ferner Anpassen des Betriebs des Brenners basierend auf der wenigstens einen Größe von Interesse umfasst.

4. Verfahren nach einem vorhergehenden Anspruch, wobei der vortrainierte Algorithmus erzeugt wird durch Aufnehmen eines Videostroms, der das Brennerende des Kalkofens zeigt;
Extrahieren mehrerer Trainingsbilder aus dem aufgenommenen Videostrom und Segmentieren jedes Bildes der mehreren Trainingsbilder in Bereiche von Interesse, wobei der Bereich von Interesse für wenigstens ein Bild das Innere des Kalkofens umfasst; und
Trainieren eines Algorithmus zum Erkennen der Bereiche von Interesse aus den segmentierten Bildern.

5. Verfahren nach Anspruch 4, das ferner Folgendes umfasst:
Extrahieren eines Referenzbildes aus dem aufgenommenen Videostrom; und
Bestimmen, unter Verwendung bekannter Abmessung des Kalkofens, die in dem Referenzbild sichtbar sind, einer entsprechenden Größe in SI-Einheiten für ein Pixel des Referenzbildes.

6. Steuersystem zum Steuern eines Brenners eines Kalkofens, welches ein System zum Überwachen einer Flamme des Brenners eines Kalkofens umfasst, welches Folgendes umfasst:
ein Bildgebungsmittel; und
einen Prozessor, der zum Bewirken des Ausführens des Verfahrens nach einem vorhergehenden Anspruch konfiguriert ist, wobei der Prozessor ferner zum Bewirken des Anpassens des Betriebs des Brenners basierend auf der wenigstens einen Größe von Interesse konfiguriert ist.

7. Computerprogrammprodukt, das computerausführbaren Programmcode umfasst, der, wenn er durch einen Prozessor ausgeführt wird, das Ausführen des Verfahrens nach einem vorhergehenden Anspruch bewirkt.

8. Nichtflüchtiges Speichermedium, das das Computerprogrammprodukt nach Anspruch 7 umfasst.

## Revendications

1. Procédé de surveillance d'une flamme d'un brûleur d'un four à chaux, comprenant
la capture d'un flux vidéo montrant l'extrémité du brûleur du four à chaux ;
l'extraction d'au moins une image à partir du flux vidéo capturé ;
la détermination, au moyen d'un algorithme pré-entraîné, à partir de l'au moins une image, d'au moins une zone d'intérêt, l'au moins une zone d'intérêt comprenant une partie de l'au moins une image montrant une zone comprenant au moins une partie caractéristique de la flamme et/ou de l'extrémité du brûleur ;
le calcul de la zone de l'au moins une partie caractéristique sur la base des pixels de l'au moins une zone d'intérêt ;
la sélection d'au moins une quantité d'intérêt calculée parmi le groupe comprenant l'angle de la flamme, la zone de flamme noire, la zone de flamme blanche, la zone de chaux, l'indice de pompage de la flamme, l'indice de poussière à l'intérieur du four, la zone de retombée de chaux, la longueur de la flamme, la largeur de la flamme et l'angle de la pointe de la flamme ;
la détermination de l'au moins une quantité d'intérêt sur la base de la zone calculée de l'au moins une partie caractéristique ; et la comparaison de la zone calculée et de l'au moins une quantité d'intérêt à des valeurs seuil prédéterminées.

2. Procédé selon la revendication 1, comprenant en outre l'affichage de l'au moins une quantité d'intérêt sur un élément d'interface utilisateur.

3. Procédé selon la revendication 1, comprenant en outre l'ajustement du fonctionnement du brûleur sur la base de l'au moins une quantité d'intérêt.

4. Procédé selon l'une quelconque des revendications précédentes, dans lequel l'algorithme pré-entraîné est créé par
la capture d'un flux vidéo montrant l'extrémité du brûleur du four à chaux ;
l'extraction d'une pluralité d'images d'entraînement à partir du flux vidéo capturé et la segmentation de chaque image de la pluralité d'images d'entraînement dans des zones d'intérêt, la zone d'intérêt pour au moins une image comprenant l'intérieur du four à chaux ; et l'entraînement d'un algorithme pour reconnaître les zones d'intérêt dans les images segmentées.

5. Procédé selon la revendication 4, comprenant en outre
l'extraction d'une image de référence à partir du flux vidéo capturé ; et
la détermination, à l'aide de dimensions connues du four à chaux visible dans l'image de référence, de la taille correspondante en unités SI pour un pixel de l'image de référence.

6. Système de commande pour commander un brûleur d'un four à chaux, comprenant un système pour surveiller une flamme du brûleur d'un four à chaux, comprenant des moyens de capture d'images ; et
un processeur configuré pour réaliser la mise en œuvre du procédé selon l'une quelconque des revendications précédentes, le processeur étant en outre configuré pour réaliser l'ajustement du fonctionnement du brûleur sur la base de l'au moins une quantité d'intérêt.

7. Produit de programme informatique, comprenant un code de programme exécutable par ordinateur qui, lorsqu'il est exécuté par un processeur, réalise la mise en œuvre du procédé selon l'une quelconque des revendications précédentes.

8. Support de stockage non transitoire comprenant le produit de programme informatique selon la revendication 7.
